# EUROPÄISCHE PATENTSCHRIFT

(11) **EP 2 298 831 B1**
(45) Veröffentlichungstag und Bekanntmachung des Hinweises auf die Patenterteilung: **20.02.2013**
(21) Anmeldenummer: 09290710.4
(22) Anmeldetag: 17.09.2009
(51) Int. Cl.: C08G 71/04

(54) **Schaumarme Netzmittel**
Low foaming wetting agent
Agents mouillants peu moussants

(43) Veröffentlichungstag der Anmeldung: 23.03.2011
(73) Patentinhaber: Cognis IP Management GmbH, 49589 Düsseldorf (DE)
(72) Erfinder: Münzenberg, Cindy, 40239 Düsseldorf (DE); Wiethoff, Helena, 40221 Düsseldorf (DE)

(56) Entgegenhaltungen:
- WO-A1-03/066580
- WO-A1-2004/050888

## Beschreibung

### Gebiet der Erfindung

Die Erfindung betrifft die spezielle alkoxylierte Urethane sowie deren Verwendung als schaumarme Tenside und insbesondere als schaumarme Netzmittel.

### Stand der Technik

Urethane werden konventionell durch Umsetzung von Alkoholen mit Isocyanaten hergestellt. Das Charakteristikum dieser Stoffklasse, also der Urethane, ist die Urethangruppe -O-CO-NH-. Eine Alternative bei der Generierung von Urethangruppen ist die Umsetzung eines cyclischen Carbonates mit einen primären Amin. Die Besonderheit dieses synthetischen Zuganges zu Urethanen besteht darin, dass auf Isocyanate als Rohstoff verzichtet werden kann. Der Fachmann spricht bei Urethanen, die über die letztgenannte Syntheseroute zugänglich sind, von "non-isocyanate urethanes" (NIUs). NIUs sind auf Grund ihrer freien OH-Gruppe zu weiteren chemischen Modifikationen befähigt. So ist bei den NIUs beispielsweise die Veresterung bzw. Umesterung mit Acrylsäurederivaten bekannt, vergl. z.B. US2005/0113594, US2004/02236119, US7045577, US7329773, US 7164037, US2007/0197820. Diese so hergestellten acrylischen Verbindungen finden Verwendung als vernetzbare Beschichtungen.

### Beschreibung der Erfindung

Es besteht ein ständiger Bedarf nach Tensiden. Dabei ist es für die unterschiedlichsten Anwendungszwecke, bei denen Schaum eher störend ist, von Vorteil, wenn diese Tenside in wässrigen Systemen nur sehr wenig Schaum verursachen. Aufgabe der vorliegenden Erfindung war es, schaumarme Tenside bereitzustellen. Insbesondere sollten schaumarme Netzmittel bereitgestellt werden.

Es wurde nun gefunden, dass spezielle Derivate von Urethanen vom NIU-Typ die erfindungsgemäße Aufgabe in ganz ausgezeichneter Weise zu lösen vermögen.

Gegenstand der vorliegenden Erfindung sind Verbindungen der Struktur (I) 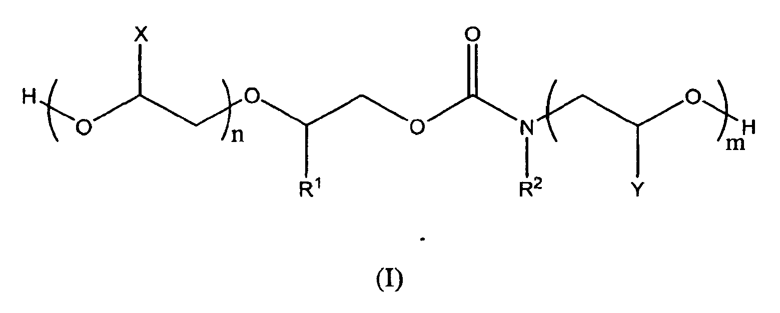 worin bedeuten:
- R¹ Wasserstoff, einen Alkylrest mit 1 bis 3 C-Atomen oder eine Gruppe R³
- R² eine Alkylgruppe mit 2 bis 22 C-Atomen, wobei dieser Rest linear oder verzweigt oder cyclisch sowie gesättigt oder ein- oder mehrfach olefinisch ungesättigt sein kann,
- R³ ein gesättigter Alkylrest mit 1 bis 3 C-Atomen, wobei dieser Alkylrest an einem der C-Atome durch eine Gruppe -O-(CH₂-CHZ-O)ₚ-H substituiert ist
- X, Y und Z unabhängig voneinander Wasserstoff- oder einen Methylrest,
- n und m unabhängig voneinander eine Zahl im Bereich von 1 bis 45 und p eine Zahl im Bereich von 0 bis 45 mit der Maßgabe, dass die Summe n + m + p im Bereich von 2 bis 70 liegen muss.

Ein weiterer Gegenstand der vorliegenden Erfindung ist die Verwendung von Verbindungen der Struktur (I) 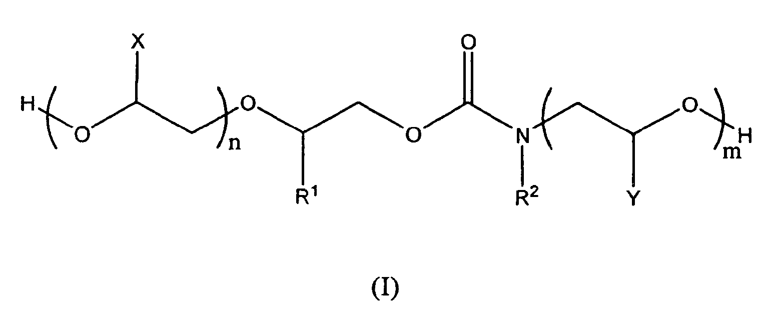 als schaumarme Tenside. In der Formel (I) bedeuten:
- R¹ Wasserstoff, einen Alkylrest mit 1 bis 3 C-Atomen oder eine Gruppe R³
- R² eine Alkylgruppe mit 2 bis 22 C-Aomen, wobei dieser Rest linear oder verzweigt oder cyclisch sowie gesättigt oder ein- oder mehrfach olefinisch ungesättigt sein kann,
- R³ ein gesättigter Alkylrest mit 1 bis 3 C-Atomen, wobei dieser Alkylrest an einem der C-Atome durch eine Gruppe -O-(CH₂-CHZ-O)ₚ-H substituiert ist
- X, Y und Z unabhängig voneinander Wasserstoff- oder einen Methylrest,
- n und m unabhängig voneinander eine Zahl im Bereich von 1 bis 45 und p eine Zahl im Bereich von 0 bis 45 mit der Maßgabe, dass die Summe n + m + p im Bereich von 2 bis 70 liegen muss.

Insbesondere eignen sich die Verbindungen der Struktur (I) als schaumarme Netzmittel.

### EO- und/oder PO-Bausteine

Die Verbindungen (I) enthalten Strukturelemente -(CH₂-CHX-O)ₙ-, -(CH₂-CHY-O)ₘ-und -(CH₂-CHZ-O)ₚ-, wobei die obigen Massgaben gelten.

Es sei festgestellt, dass die verwendete Formelschreibweise ausdrücken soll, dass sich die genannten Strukturelemente von Ethylenoxid (EO) oder Propylenoxid (PO) ableiten, nämlich insofern, als sich - logischerweise für den Fall, dass die Indices m, n und p ungleich null sind - diese Bausteine synthetisch aus einer Addition von EO oder PO bzw. Ethylenglykol oder Propylenglykol (für n, m, p = 1) bzw. Polyaddition von EO und/oder PO bzw. Polyethylenglykol oder Polypropylenglykol oder entsprechenden gemischten EO-PO-Copolymeren (für n, m, p ≥ 2) resultieren. Es sei ferner ausdrücklich festgestellt, dass jedes dieser Strukturelemente - unabhängig voneinander - sowohl ausschließlich aus EO- als auch ausschließlich aus PO-Bausteinen aufgebaut sein kann, als auch EO- und PO-Bausteine in gemischter Form, blockweise oder statistisch verteilt, enthalten kann. Daher stellt die verwendete formelmäßige Darstellung der genannten Strukturelemente eine abkürzende Schreibweise für die genannten Möglichkeiten dar, welche dem kundigen Fachmann selbstverständlich sind.

So bedeutet etwa X = H und n = 5, dass das entsprechende Strukturelement fünf miteinander verknüpfte EO-Einheiten enthält, was einer Gruppierung -(O-CH₂-CH₂-)₅-entspricht; dagegen bedeutet X = CH₃ und n = 5, dass das Strukturelement fünf miteinander verknüpfte PO-Einheiten enthält, was einer Gruppierung -(O-CH₂-CH(CH₃))₅-entspricht, wobei - wie dem Fachmann bekannt - die Orientierung der Methylgruppe innerhalb des Strukturelements für jeden PO-Baustein in zweierlei Weise realisiert sein kann, nämlich als - (O-CH₂-CH(CH₃))- oder -(O-CH(CH₃)-CH₂)-.

Die Formel (I) ist im Rahmen der vorliegenden Erfindung so zu verstehen, dass EO-und PO-Bausteine auch innerhalb der genannten Strukturelemente gleichzeitig vorhanden sein können (was logischerweise voraussetzt, dass die Indizes dann jeweils mindestens die Zahl 2 bedeuten). Der Ausdruck "unabhängig voneinander" innerhalb des Terminus, dass ,,X, Y und Z unabhängig voneinander Wasserstoff- oder einen Methylrest" bedeuten, bezieht sich also nicht nur auf die genannten unterschiedlichen Strukturelemente, sondern gilt auch innerhalb ein- und desselben Strukturelementes.

### Zu den Verbindungen (I)

Bei dem Rest R² handelt es sich um eine Alkylgruppe mit 2 bis 22 und bevorzugt 6 bis 14 C-Atomen, wobei dieser Rest sein kann:
- einen linear oder verzweigt oder cyclisch,
- gesättigten oder ein- oder mehrfach olefinisch ungesättigt.

Beispielhaft seien folgende Alkylreste R² genannt: Lauryl (C12), Myristyl (C14), Cetyl (C16), Stearyl (C 18), 2-Ethylhexyl.

In einer bevorzugten Ausführungsform handelt es sich bei den Alkylresten R² um Alkylreste, die gesättigt und verzweigt sind. Dabei ist der Rest 2-Ethylhexyl besonders bevorzugt.

In einer Ausführungsform ist der Rest R¹ Wasserstoff.

In einer Ausführungsform ist der Rest R¹ ein Alkylrest mit 1 bis 3 C-Atomen.

In einer Ausführungsform sind alle Reste X, Y und Z Wasserstoff.

In einer Ausführungsform ist die Summe n + m + p im Bereich von 5 bis 50 und insbesondere von 10 bis 25.

In einer Ausführungsform gilt, dass n und m unabhängig voneinander eine Zahl im Bereich von 3 bis 45 bedeuten, insbesondere 5 bis 45 und vorzugsweise 10 bis 45.

In einer Ausführungsform gilt: Der Rest R¹ ist Wasserstoff, der Rest R² ist ein gesättigter, verzweigter Alkylrest; alle Reste X, Y und Z sind Wasserstoff; die Summe n + m + p liegt im Bereich von 5 bis 50 und insbesondere von 10 bis 25. Logischerweise gilt für diese Ausführungsform, dass der Index p den Wert Null hat.

In einer Ausführungsform gilt: Der Rest R¹ ist eine Gruppe R³, wobei R³ die Bedeutung CH₂OH hat, der Rest R² ist ein gesättigter, verzweigter Alkylrest; alle Reste X, Y und Z sind Wasserstoff; die Summe n + m + p liegt im Bereich von 5 bis 50 und insbesondere von 10 bis 25.

Die Verbindungen (I) zeichnen sich durch tensidische Eigenschaften aus. Ihre Eignung als schaumarme Tenside ist ganz ausgezeichnet. Der Begriff Tenside ist dem Fachmann bekannt: Demnach ist der Begriff Tensid eine Sammelbezeichnung für grenzflächenaktive Verbindungen, deren Moleküle ein oder mehrere lipohipile und ein oder mehrere hydrophile Gruppen aufweisen. Durch ihren amphiphilen Aufbau reichern sich Tenside an Grenzflächen an, wodurch zahlreiche physikalisch-chemische Phänomeine ausgelöst werden, die unter anderem die Wirkung der Tenside beim Waschen, Benetzen, Emulgieren, Dispergieren und Reinigen bedingen. Häufig spricht man von Tensiden, wenn man auf die genannte typische Struktur dieser Verbindungen hinweisen möchte, jedoch von Netzmitteln, wenn man die speziellen benetzenden Eigenschaften der Tenside besonders betonen möchte. Insofern wird der Begriff Tensid im Vergleich etwa zum Begriff Netzmittel als ein übergeordneter Begriff verstanden, weil mit dem Begriff Tensid wie erwähnt eine Reihe funktioneller Eigenschaften verknüpft sind (etwa dass Tenside unter funktioneller Betrachtungsweise im Prinzip Netzmittel (auch Benetzungsmittel genannt), Emulgatoren oder Dispergatoren sind. Natürlich ist über das quantitative Ausmaß, in welchem ein Tensid benetzt, emulgiert, dispergiert etc. nichts gesagt, d.h. in aller Regel kann der Fachmann aus einer bestimmten Struktur, die hydrophile und hydrophobe Strukturelemente aufweist und die er der obigen Definition zufolge strukturell den Tensiden zuordnen würde, nicht die konkreten Wirkeigenschaften dieser Struktur vorhersagen. Tenside setzen etwa die Oberflächenspannung des Wassers herab, in welchem Maße sie dies zu tun vermögen, hängt stark von ihrer Struktur ab und ist bei komplexen Molekülen in der Regel nicht klar zu prognostizieren. So enthalten etwa Methanol und Seifen jeweils einen hydrophilen Rest (bei Methanol ist es eine OH-Gruppe, bei Seifen eine CO₂H-Gruppe) und einen hydrophoben Rest (bei Methanol ist es eine CH₃-Gruppe, bei Seifen eine langkettige Alkylgruppe); demnach sind strukturell sowohl Methanol als auch Seifen den Tensiden zuzuordnen, gleichwohl liegen hier fundamental unterschiedliche physikochemische Eigenschaften vor und man wird Methanol kaum als Netzmittel oder Emulgator einsetzen, weil die diesbezüglichen Wirkeigenschaften nicht ausreichen.

Unter dem Begriff "schaumarm" wird im Rahmen der vorliegenden Erfindung verstanden, dass die Verbindungen (I) in wässrigem Milieu eine nur sehr geringe Schaumentwicklung zeigen: Die Verbindungen (I) weisen in dem nachfolgend beschriebenen Schaumtest Schaumhöhen-Werte unterhalb von 25 ml auf. Der anzuwendende Schaumtest ist wie folgt: In einem 250 ml Weithalsglas werden 200 g einer 0,25 Gew.-%igen Lösung der Probesubstanz in vollentsalztem Wasser angesetzt. Nach einer Rührzeit von 15 Minuten, wobei das Rühren mittels einer Magnetrührplatte erfolgt, wird ein 100 ml Messzylinder mit Schliff bis auf 75 ml mit der Probelösung befüllt und mit einem Stopfen verschlossen. Der Zylinder wird für eine Zeit von 10 Sekunden geschüttelt und unmittelbar nach beendetem Schütteln wird die Schaumhöhe in Millilitern (ml) abgelesen.

Die Verbindungen (I) zeichnen sich insbesondere dadurch aus, dass sie schaumarme Netzmittel sind. Für den Begriff "schaumarm" gilt die obige Definition.

Die Verbindungen (I) lassen sich beispielsweise wie folgt herstellen: Cyclische Carbonate (1 mol) werden mit einem Überschuss an Amin (1,01 bis 5 mol, bevorzugt 1,05 bis 2.5 mol) umgesetzt. Dabei wird vorzugsweise das Amin vorgelegt, insbesondere bei etwa 45°C, und das cyclische Carbonat wird zugetropft, wobei die Temperatur während der Reaktion etwa 90 °C nicht überschreiten sollte. Vorzugsweise führt man die Umsetzung in einem Temperaturbereich von 60 bis 70°C. Nach beendeter Reaktion (daran erkennbar, dass die Aminzahl konstant bleibt) wird unter Vakuum das überschüssige Amin abgezogen. Die Ethoxylierung und/oder Propoxylierung des wie beschrieben erhaltenen Intermediates erfolgt unter Standardbedingungen (typischerweise KOH-katalysiert).

Ein Beispiel für die genannte Methode der Synthese der Verbindungen (I) ist die Umsetzung von Ethylencarbonat mit 2-Ethylhexylamin zu einem Intermediat, das anschließend mit Ethylenoxid umgesetzt wird. Eine konkrete Ausgestaltung dieser Reaktion ist dem Beispielteil zu entnehmen.

### Beispiele

### Beispiel 1

Es wurden Ethylencarbonat (Huntsman) und 2-Ethylhexylamin zur Reaktion gebracht. Dafür wurden 1,05 mol 2-Ethylhexylamin in einem 4-Halskolben vorgelegt und ein schwacher Stickstoffstrom über die Lösung geleitet, der während der ganzen Reaktionszeit Anwendung fand. Nachdem das Amin auf 45°C erhitzt wurde, wurde 1 mol des Ethylencarbonates über einen Tropftrichter zum Amin gegeben, wobei die Reaktionstemperatur 60°C nicht überschritt. Während der folgenden Reaktionszeit von 3,5 Stunden wurde die Reaktionstemperatur bei 60°C gehalten. Sobald eine konstante Aminzahl (potentiometrische Titration) erreicht war, wurde durch Anlegen von Vakuum das überschüssige Amin abgezogen. Die erhaltene leicht gelbe Zwischenverbindung wurde unter Druck KOH-katalysiert ethoxyliert und zwar wie folgt: Die Zwischenverbindung (1,39 mol) und 2,22 g KOH (50 Gew.-%ig) wurden vorgelegt. Es wurde 30 Minuten bei 100°C und 30 mbar evakuiert, anschließend wurde mit Stickstoff belüftetet. Die Umsetzung erfolgte bei 170 - 180 °C und einem Druck von maximal 5 bar. Nach beendeter Reaktion wurde noch 30 Minuten bei 170°C und 5 bar nachgerührt.

Die Oberflächenspannung dieses Produktes betrug 31 mN/m. Die Viskosität wurde mit einem Brookfield RVT Viskosimeter bestimmt (bei 50 Upm / 24 °C / Spindel 3) und betrug 160 mPas. Das Produkt wies im oben beschriebenen Schaumtest einen Wert von 11 ml auf.

## Patentansprüche

1. Verbindungen der Struktur (I) 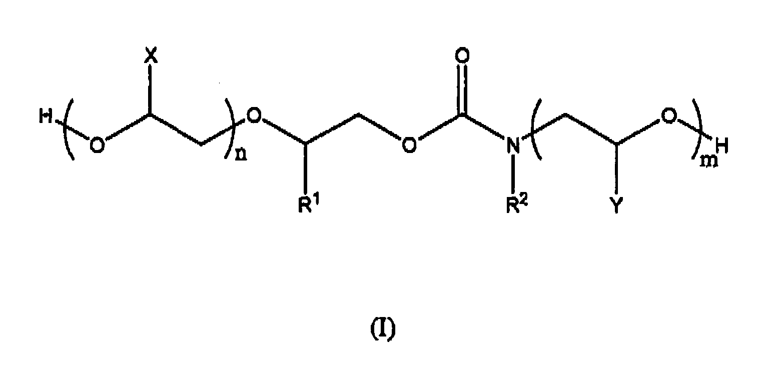 worin bedeuten:
• R¹ Wasserstoff, einen Alkylrest mit 1 bis 3 C-Atomen oder eine Gruppe R³,
• R² eine Allylgruppe mit 2 bis 22 C-Atomen, wobei dieser Rest linear oder verzweigt oder cyclisch sowie gesättigt oder ein- oder mehrfach olefinisch ungesättigt sein kann,
• R³ ein gesättigter Alkylrest mit 1 bis 3 C-Atomen, wobei dieser Alkylrest an einem der C-Atome durch eine Gruppe -O-(CH₂-CHZ-O)ₚ-H substituiert ist,
• X, Y und Z unabhängig voneinander Wasserstoff oder einen Methylrest,
• n und m unabhängig voneinander eine Zahl im Bereich von 1 bis 45 und p eine Zahl im Bereich von 0 bis 45 mit der Maßgabe, dass die Summe n + m + p im Bereich von 2 bis 70 liegen muss.

2. Verwendung von Verbindungen der Struktur (I) gemäß Anspruch 1 als schaumarme Tenside, mit der Maßgabe, dass die Verbindungen (I) in dem nachfolgend beschriebenen Schaumtest Schaumhöhen-Werte unterhalb von 25 ml aufweisen müssen. Der anzuwendende Schaumtest ist wie folgt: In einem 250 ml Weithalsglas werden 200 g einer 0,25 Gew.-%igen Lösung der Probesubstanz in vollentsalztern Wasser angesetzt. Nach einer Rührzeit von 15 Minuten, wobei das Rühren mittels einer Magnetrührplatte erfolgt, wird ein 100 ml Messzylinder mit Schliff bis auf 75 ml mit der Probelösung befüllt und mit einem Stopfen verschlossen. Der Zylinder wird für eine Zeit von 10 Sekunden geschüttelt und unmittelbar nach beendetem Schütteln wird die Schaumhöhe in Millilitern (ml) abgelesen.

3. Verwendung nach Anspruch 2, wobei der Rest R¹ Wasserstoff ist.

4. Verwendung nach Anspruch 2, wobei der Rest R¹ ein Alkylrest mit 1 bis 3 C-Atomen ist.

5. Verwendung nach Anspruch 2, wobei alle Reste X, Y und Z Wasserstoff sind.

6. Verwendung nach einem der Ansprüche 2 bis 5, wobei die Summe n + m + p im Bereich von 10 bis 25 liegt.

7. Verwendung nach Anspruch 2, wobei gilt: Der Rest R¹ ist Wasserstoff, der Rest R² ist ein gesättigter, verzweigter Alkylrest; alle Reste X, Y und Z sind Wasserstoff;
die Summe n + m + p, wobei p=0 ist, liegt in Bereich von 10 bis 25.

8. Verwendung nach Anspruch 7, wobei der Rest R² eine 2-Ethylhexylgruppe bedeutet.

9. Verwendung nach Anspruch 2, wobei gilt: Der Rest R¹ ist eine Gruppe R³, wobei R³ die Bedeutung CH₂OH hat, der Rest R² ist ein gesättigter, verzweigter Akylrest; alle Reste X, Y und Z sind Wasserstoff; die Summe n + m + p liegt im Bereich von 10 bis 25.

## Claims

1. Compounds of the structure (I) 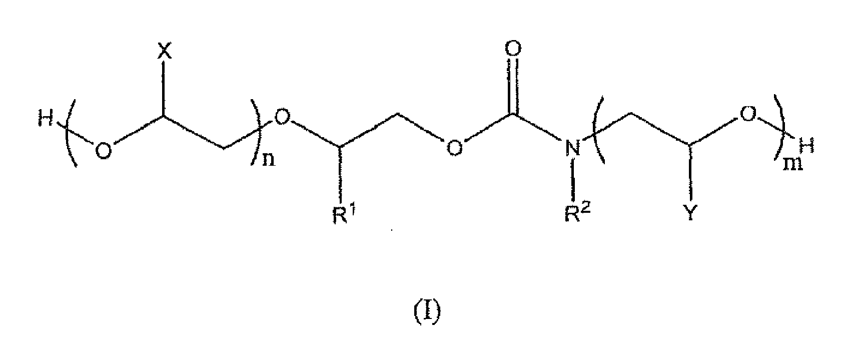 in which:
• R¹ is hydrogen, an alkyl radical having 1 to 3 C atoms or a group R³,
• R² is an alkyl group having 2 to 22 C atoms, it being possible for this radial to be linear or branched or cyclic and also saturated or mono- or poly-olefinically unsaturated,
• R³ is a saturated alkyl radical having 1 to 3 C atoms, this alkyl radical being substituted on one of the C atoms by a group -O-(CH₂-CHZ-O)ₚ-H,
• X, Y and Z independently of one another are hydrogen radical or a methyl radical,
• n and m independently of one another are a number in the range from 1 to 45 and p is a number in the range from 0 to 45, with the proviso that the sum n + m + p must lie in the range from 2 to 70.

2. Use of compounds of the structure (I) according to Claim 1 as low-foam surfactants, with the proviso that in the foam test described below, the compounds (I) must exhibit foam height values of below 25 ml. The foam test to be applied is as follows: in a 250 ml wide-neck glass vessel, 200 g of a 0.25% strength by weight solution of the test substance in fully demineralized water are prepared. After a stirring time of 15 minutes, the stirring taking place by means of a magnetic stirring plate, a 100 ml measuring cylinder with ground glass joint is filled to 75 ml with the test solution and closed with a stopper. The cylinder is shaken for a time of 10 seconds and the foam height, in milliliters (ml), is read off immediately after the end of shaking.

3. Use according to Claim 2, where the radical R¹ is hydrogen.

4. Use according to Claim 2, where the radical R¹ is an alkyl radical having 1 to 3 C atoms.

5. Use according to Claim 2, where all of radicals X, Y and Z are hydrogen.

6. Use according to any of Claims 2 to 5, where the sum n + m + p lies in the range from 10 to 25.

7. Use according to Claim 2, where the following is the case: the radical R¹ is hydrogen, the radical R² is a saturated, branched alkyl radical; all of radicals X, Y and Z are hydrogen; the sum n + m + p, where p = 0, lies in the range from 10 to 25.

8. Use according to Claim 7, where the radical R² is a 2-ethylhexyl group.

9. Use according to Claim 2, where the following is the case: the radical R¹ is a group R³, R³ having the meaning CH₂OH, the radical R² is a saturated, branched alkyl radical; all of radicals X, Y and Z are hydrogen; the sum n + m + p lies in the range from 10 to 25.

## Revendications

1. Composés de structure (I) 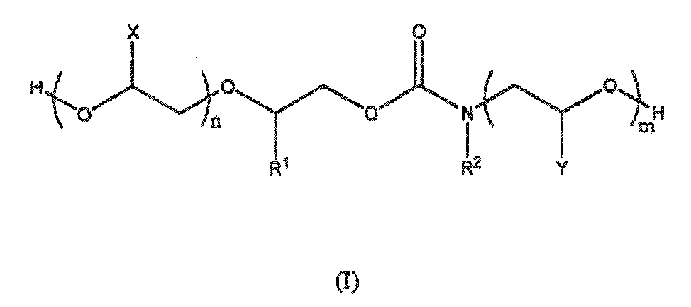 dans laquelle :
• R¹ représente un atome d'hydrogène, un radical alkyle ayant de 1 à 3 atomes de carbone ou un groupe R³,
• R² représente un groupe alkyle ayant de 2 à 22 atomes de carbone, ce radical pouvant être linéaire ou ramifié ou cyclique ainsi que saturé ou à une ou plusieurs insaturations oléfiniques,
• R³ représente un radical alkyle saturé ayant de 1 à 3 atomes de carbone, ce radical alkyle étant substitué sur l'un des atomes de carbone par un groupe -O-(CH₂-CHZ-O)ₚ-H,
• X, Y et Z représentent chacun indépendamment un atome d'hydrogène ou un radical méthyle,
• n et m représentent indépendamment l'un de l'autre un nombre dans la plage de 1 à 45 et p représente un nombre dans la plage de 0 à 45, étant entendu que la somme n + m + p doit se situer dans la plage de 2 à 70.

2. Utilisation de composés de structure (I) selon la revendication 1, en tant que tensioactifs peu moussants, étant entendu que les composés (I) doivent présenter dans le test de moussage décrit ci-après des valeurs de hauteur de mousse inférieures à 25 ml. Le test de moussage à utiliser est comme suit : dans une fiole de 250 ml à large col on introduit 200 g d'une solution à 0,25 % en poids de la substance d'essai dans de l'eau totalement déminéralisée. Après un temps d'agitation de 15 minutes, l'agitation s'effectuant au moyen d'une plaque à agitateur magnétique, on remplit à 75 ml une éprouvette graduée de 100 ml à rodage et on la ferme avec un bouchon. On secoue l'éprouvette pendant une durée de 10 secondes et immédiatement une fois le secouement terminé on lit la hauteur de la mousse en millilitres (ml).

3. Utilisation selon la revendication 2, dans laquelle le radical R¹ est un atome d'hydrogène.

4. Utilisation selon la revendication 2, dans laquelle le radical R¹ est un radical alkyle ayant de 1 à 3 atomes de carbone.

5. Utilisation selon la revendication 2, dans laquelle tous les radicaux X, Y et Z sont des atomes d'hydrogène.

6. Utilisation selon l'une quelconque des revendications 2 à 5, dans laquelle la somme n + m + p se situe dans la plage de 10 à 25.

7. Utilisation selon la revendication 2, dans laquelle il s'applique que : le radical R¹ est un atome d'hydrogène, le radical R² est un radical alkyle ramifié, saturé ; tous les radicaux X, Y et Z sont des atomes d'hydrogène ; la somme n + m + p, p étant égal à 0, se situe dans la plage de 10 à 25.

8. Utilisation selon la revendication 7, dans laquelle le radical R² représente un groupe 2-éthyl-hexyle.

9. Utilisation selon la revendication 2, dans laquelle il s'applique que : le radical R¹ est un groupe R³, R³ ayant la signification de CH₂OH, le radical R² est un radical alkyle ramifié, saturé ; tous les radicaux X, Y et Z sont des atomes d'hydrogène ; la somme n + m + p se situe dans la plage de 10 à 25.
